# EUROPÄISCHE PATENTSCHRIFT

(11) **EP 4 243 959 B1**
(45) Veröffentlichungstag und Bekanntmachung des Hinweises auf die Patenterteilung: **10.07.2024**
(21) Anmeldenummer: 21782432.5
(22) Anmeldetag: 08.09.2021
(51) Int. Cl.: B01D 45/14, B04B 5/08, F01N 3/037, F02B 37/02

(54) **VORRICHTUNG ZUR FLIEHKRAFTBEDINGTEN ABSCHEIDUNG VON PARTIKELN AUS EINEM GASSTROM**
DEVICE FOR THE SEPARATION OF PARTICLES FROM A GAS STREAM USING CENTRIFUGAL FORCE
DISPOSITIF DE SÉPARATION DE PARTICULES D'UN COURANT DE GAZ À L'AIDE D'UNE FORCE CENTRIFUGE

(30) Priorität: 11.11.2020 AT 509712020
(43) Veröffentlichungstag der Anmeldung: 20.09.2023
(73) Patentinhaber: LZTech GmbH, 4600 Wels (AT)
(72) Erfinder: LETTNER, Josef, 4611 Buchkirchen (AT)
(74) Vertreter: Hübscher & Partner Patentanwälte GmbH
(86) Internationale Anmeldenummer: PCT/AT2021/060320
(87) Internationale Veröffentlichungsnummer: WO 2022/099328

(56) Entgegenhaltungen:
- DE-T2- 69 205 563
- DE-U1- 202019 002 964
- US-A1- 2002 194 994

## Beschreibung

### Technisches Gebiet

Die Erfindung bezieht sich auf eine Vorrichtung zur fliehkraftbedingten Abscheidung von Partikeln aus einem Gasstrom, mit einem einen Einströmkanal für das Rohgas aufweisenden Gaseinlass und einem einen Ausströmkanal für das partikelfreie Reingas aufweisen Gasauslass, einer bezüglich einer Drehachse rotierbaren, drehangetriebenen Welle, sowie einem auf der Welle angeordneten, beschaufelten Abscheiderotor, der einen zur Drehachse koaxialen Abscheidekanal mit ringförmigem Querschnitt bildet, wobei sich der Abscheidekanal in Längsrichtung der Drehachse von einem mit dem Gaseinlass strömungsverbundenen Einlassabschnitt zu einem mit dem Gasauslass strömungsverbundenen Auslassabschnitt erstreckt und mantelumfangsseitig Austrittsöffnungen für die abzuscheidenden Partikel aufweist.

### Stand der Technik

Zur fliehkraftbedingten Abscheidung von Partikeln aus einem Gasstrom sind beispielsweise aus der DE 69205563 T2 oder der US 2002/194994 A1 Vorrichtungen bekannt, die eine drehangetriebene Welle sowie einen auf der Welle angeordneten, beschaufelten Abscheiderotor aufweisen. Der Abscheiderotor erstreckt sich dabei in Längsrichtung der Drehachse bzw. in Hauptströmungsrichtung und bildet zwischen einem Gaseinlass und einem Gasauslass einen zur Drehachse koaxialen Abscheidekanal mit ringförmigem Querschnitt. Dies bedeutet, dass Kanalboden und Kanaldecke zumindest abschnittsweise von der Mantelfläche der Welle bzw. vom Außenmantel des Abscheiderotors gebildet werden. Das aufzureinigende Rohgas wird über einen Einströmkanal des Gaseinlasses dem Abscheidekanal zugeführt, wo die im Rohgas enthaltenen Feststoffpartikel durch die Zentrifugalbeschleunigung nach außen befördert werden. Die Partikel werden über mantelumfangsseitige Austrittsöffnungen des Abscheiderotors abgeschieden und der aufgereinigte Gasstrom wird schließlich als sogenanntes Reingas über einen Ausströmkanal des Gasauslasses abgeführt.

Nachteilig an derartigen Vorrichtungen ist allerdings, dass die Abscheidewirkung für kleinere Partikel stark begrenzt ist, zumal die Abscheidewirkung maßgeblich von der Zentrifugalbeschleunigung und damit von der Umfangsgeschwindigkeit des Abscheiderotors abhängt. Um demnach auch kleinere Partikel unter 5 µm zuverlässig abscheiden zu können, müsste die Welle bzw. der Abscheiderotor mit entsprechend höheren Drehgeschwindigkeiten betrieben werden, was in der Praxis allerdings nur begrenzt möglich ist. Folglich führt eine unvollständige Abscheidung kleinerer Partikel dazu, dass diese im Reingas über den Gasauslass abgeführt werden, sodass das Reingas einer zusätzlichen Nachbehandlung, beispielsweise mithilfe von Gewebefiltern oder elektrostatischen Abscheidern, unterzogen werden muss.

### Darstellung der Erfindung

Der Erfindung liegt somit die Aufgabe zugrunde, eine Vorrichtung der eingangs geschilderten Art so auszugestalten, dass diese trotz einer kompakten und wartungsarmen Bauweise einen höheren Abscheidungsgrad von Partikeln aus einem Gasstrom ermöglicht, sodass insbesondere auch kleinere Partikel unter 5 µm zuverlässig abgeschieden werden können und eine Nachbehandlung des abgeführten Reingases entfällt.

Die Erfindung löst die gestellte Aufgabe dadurch, dass dem Abscheiderotor im Auslassabschnitt ein zur Drehachse koaxiales, ringförmiges Strömungsleitelement zur Teilung des Gasstromes in einen partikelbeladenen und einen partikelfreien Teilstrom zugeordnet ist und dass zur Rückführung des partikelbeladenen Teilstromes in den Abscheidekanal der Gasauslass einen zusätzlichen, dem partikelbeladenen Teilstrom zugeordneten Abzweigkanal ausbildet, der mit einem zusätzlichen Rückführkanal des Gaseinlasses strömungsverbunden ist. Klarstellend sei anzumerken, dass als ringförmig im Sinne der Erfindung sowohl beispielsweise Kreis- bzw. Ovalformen, als auch Polygonformen angesehen werden.

Der Erfindung liegt zunächst die Überlegung zugrunde, dass die wesentliche Abscheideursache bei Fliehkraftabscheidern die Überschreitung der sogenannten Grenzbeladung des Gasstromes ist und die Partikel im Abscheidekanal solange an der Außenwand aufkonzentriert werden, bis die Grenzbeladung erreicht ist. Dabei kann davon ausgegangen werden, dass sämtliche Partikel abgeschieden werden, die eine bestimmte charakteristische Länge überschreiten. Diese charakteristische Länge ist abhängig von den Abmessungen des Abscheiderotors bzw. der Welle, der axialen Strömungsgeschwindigkeit des Gases bzw. der Verweildauer des Gases sowie der Zentrifugalbeschleunigung im Abscheidekanal. Die physikalische Grundlage dieses Zusammenhangs lässt sich in erster Näherung auf das Gesetz von Stokes, angewandt auf die Absinkgeschwindigkeit eines Partikels in einem Fluid, zurückführen.

Vor diesem Hintergrund wird zufolge der erfindungsgemäßen Merkmale der Gasstrom im Auslassabschnitt über den Strömungsteiler in einen radial äußeren partikelbeladenen Teilstrom, welcher sich an der dem Abscheiderotor zugeordneten Außenwand des Abscheidekanals ausbildet, und einen radial inneren partikelfreien Teilstrom, der sich zwischen dem radial äußeren partikelbeladenen Teilstrom und der Mantelfläche der Welle bzw. der radial inneren Wand des Abscheiderotors ausbildet, aufgeteilt. Während der partikelfreie Teilstrom im Sinne eines Reingases über den Ausströmkanal abgeführt wird, strömt der partikelbeladene Teilstrom über den Abzweigkanal aus. Schließlich wird der partikelbeladene Teilstrom über den Rückführkanal dem Abscheidekanal wieder so zugeführt, dass der partikelbeladene Teilstrom wieder unmittelbar an der Außenwand des Abscheidekanals entlangströmen kann. Unter einem partikelbeladenen Teilstrom ist ein solcher Gasstrom zu verstehen, der noch nicht abgeschiedene Partikel enthält, die gleich oder größer einer vorgegebenen charakteristischen Länge sind und die im Zuge des Abscheidungsprozesses noch aus dem partikelbeladenen Teilstrom abgeschieden werden können. Demgegenüber ist unter einem partikelfreien Teilstrom im Sinne der Erfindung ein solcher Gasstrom zu verstehen, der im Wesentlichen keine abzuscheidenden Partikel mehr enthält oder höchstens nur solche Partikel, die kleiner als die entsprechend vorgegebene charakteristische Länge sind. Aufgrund der erfindungsgemäßen Merkmale wird trotz einer kompakten Bauweise erreicht, dass sich besonders günstige Strömungsbedingungen und nur geringe Druckverluste im Abscheidekanal einstellen, sodass ein besonders hoher Abscheidegrad bei gleichzeitig hoher Trennschärfe in Bezug auf die Partikelgröße erreicht wird. Die gewünschte charakteristische Länge lässt sich zudem anhand der gewählten Drehgeschwindigkeit und der Dimensionierung bzw. Ausgestaltung der entsprechenden Bauteile zuverlässig einstellen. Der Abzweigkanal und der Rückführkanal kann über einen Verbindungskanal strömungsverbunden sein. Zwischen Abzweigkanal und Rückführkanal kann je nach Bedarf auch ein zusätzliches Gebläse zwischengeschaltet sein. Weiters kann zwischen Abzweigkanal und Rückführkanal eine zusätzliche Abscheidevorrichtung angeordnet sein, sodass beispielsweise auch Feinststaubpartikel zuverlässig abgeschieden werden, welche unter Umständen nicht über die Austrittsöffnungen des Abscheidekanals abgeführt werden können. Um außerdem besonders günstige Strömungsbedingungen zu schaffen, können die Laufschaufeln des beschaufelten Abscheiderotors grundsätzlich derart ausgeformt sein, dass diese etwaige Druckverluste im Abscheidekanal kompensieren.

Besonders gute Abscheidebedingungen ergeben sich, wenn dem Abscheiderotor im Einlassabschnitt ein weiteres zur Drehachse koaxiales, ringförmiges Strömungsleitelement zugeordnet ist. Dadurch wird ein zuverlässiges Einströmen des über den Rückführkanal geführten, partikelbeladenen Teilstrom in den Abscheidekanal entlang der Außenwand ohne Vermischung mit dem Rohgas ermöglicht.

Das wenigstens eine Strömungsleitelement kann grundsätzlich Teil des Stators sein. Beispielsweise kann das wenigstens eine Strömungsleitelement Teil des Gaseinlasses bzw. des Gasauslasses sein. Um trotz kompakter Bauweise eine besonders hohe Trennschärfe bei gleichzeitig guter Abscheidewirkung zu ermöglichen, empfiehlt es sich jedoch, dass der Abscheiderotor im Einlassabschnitt oder / und im Auslassabschnitt drehfest sowohl mit der Welle als auch mit dem jeweiligen Strömungsleitelement verbundene Laufschaufeln aufweist. Vorzugsweise kann zumindest der Abscheiderotor gemeinsam mit dem wenigstens einen Strömungsleitelement und den entsprechenden Laufschaufeln einstückig ausgebildet sein.

Es kann auch vorgesehen sein, dass das jeweilige Strömungsleitelement die ihm zugeordneten Laufschaufeln bezüglich seiner Längserstreckung in Richtung der Drehachse beidseits überragt. Dadurch wird ein Verwirbeln und folglich ein Vermischen der beiden zu trennenden Gasströme im Bereich der Laufschaufeln verhindert.

Um den Abscheidegrad noch weiter zu verbessern, wird vorgeschlagen, dass der Abscheiderotor ausschließlich mantelumfangsseitige Austrittsöffnungen im Bereich des Auslassabschnittes aufweist. Dadurch, dass zufolge dieser Maßnahme der Außenmantel des Abscheiderotors nur im Bereich des Auslassabschnittes Austrittsöffnungen für die abzuscheidenden Partikeln aufweist, wird die Anzahl der potenziellen Störstellen für die Strömung verringert und somit Strömungsverwirbelungen reduziert, welche die Abscheidewirkung negativ beeinflussen könnten. Im Bereich des Auslassabschnittes bedeutet, dass sich jener Bereich im dem Auslassabschnitt zugewandten letzten Viertel, vorzugsweise im letzten Fünftel des Abscheidekanals bezogen auf dessen Länge befindet. Die Austrittsöffnungen können grundsätzlich so angeordnet sein, dass die diesbezügliche Abscheidung der Partikel vor oder nach der Trennung des radial inneren und radial äußeren Teilstromes geschieht.

Damit die für einen hohen Abscheidegrad erforderlichen Strömungsbedingungen weiter verbessert werden, empfiehlt es sich, dass der Durchmesser der radial inneren Wand des Abscheidekanals mindestens 1/3 des lichten Durchmessers des Abscheidekanals beträgt. Der Durchmesser der radial inneren Wand des Abscheidekanals kann beispielsweise der Durchmesser der Welle im Bereich des Abscheidekanals bzw. der Durchmesser der radial inneren Wand des Abscheiderotors sein.

In einer besonders bevorzugten Ausführungsform kann der Abscheidekanal zwischen Einlassabschnitt und Auslassabschnitt einbautenfrei ausgeführt sein. Dadurch werden im Abscheidekanal unerwünschte Radialströmungen weitgehend unterbunden, die die Partikel entgegen der Zentrifugalkraft wieder in den radial inneren Bereich des Abscheidekanals befördern und somit einer Trennung des Gasstromes in einen partikelbeladenen und einen partikelfreien Teilstrom entgegenwirken würden.

Die Erfindung bezieht sich auch auf ein Verfahren zur fliehkraftbedingten Abscheidung von Partikeln aus einem Gasstrom, mit einer erfindungsgemäßen Vorrichtung. Dabei wird aufzureinigende Rohgas über einen Einströmkanal des Gaseinlasses dem Abscheidekanal zugeführt und der Gasstrom im Auslassabschnitt über den wenigstens einen Strömungsteiler in einen radial äußeren partikelbeladenen Teilstrom und einen radial inneren partikelfreien Teilstrom aufgeteilt. Der partikelfreie Teilstrom wird über den Ausströmkanal im Gasauslass abgeführt und der partikelbeladene Teilstrom wird über den Abzweigkanal sowie über den mit dem Abzweigkanal strömungsverbundenen Rückführkanal dem Abscheidekanal wieder so zugeführt, dass der partikelbeladene Teilstrom wieder unmittelbar an der Außenwand des Abscheidekanals entlangströmen kann. Die abzuscheidenden Partikel werden über die Austrittsöffnungen des Abscheiderotors abgeschieden und beispielsweise einem Sammelbehälter zugeführt.

### Kurze Beschreibung der Erfindung

In der Zeichnung ist der Erfindungsgegenstand beispielsweise dargestellt. Es zeigen
- Fig. 1: eine schematische Schnittdarstellung einer erfindungsgemäßen Vorrichtung in einer ersten Ausführungsform,
- Fig. 2: eine schematische Stirnansicht eines erfindungsgemäßen Abscheiderotors und
- Fig. 3: eine schematische Schnittdarstellung einer erfindungsgemäßen Vorrichtung in einer weiteren Ausführungsform.

### Wege zur Ausführung der Erfindung

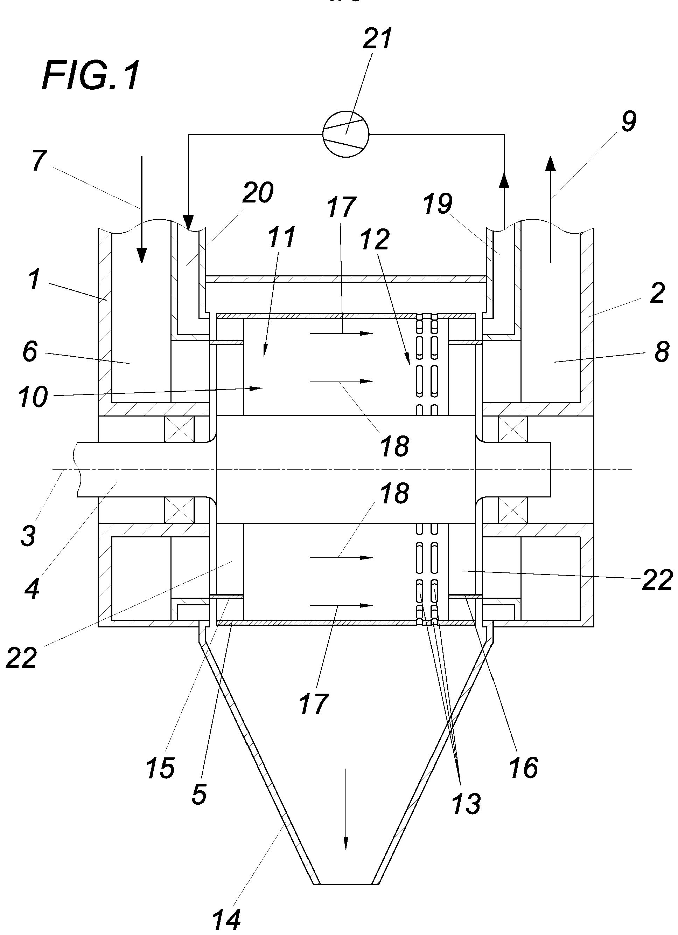

Eine erfindungsgemäße Vorrichtung weist einen Gaseinlass 1, einen Gasauslass 2, eine bezüglich einer Drehachse 3 rotierbaren, drehangetriebenen Welle 4, sowie einem auf der Welle 4 angeordneten, beschaufelten Abscheiderotor 5 auf. Der Gaseinlass 1 weist einen Einströmkanal 6 für das Rohgas 7 auf, wohingegen der Gasauslass 2 einen Ausströmkanal 8 für das Reingas 9 umfasst. Der Abscheiderotor 5 bildet einen zur Drehachse 3 koaxialen Abscheidekanal 10 mit ringförmigem Querschnitt. Der Abscheidekanal 10 erstreckt sich in Längsrichtung der Drehachse 3 von einem mit dem Gaseinlass 1 strömungsverbundenen Einlassabschnitt 11 zu einem mit dem Gasauslass 2 strömungsverbundenen Auslassabschnitt 12. Darüber hinaus weist der Abscheiderotor 5 mantelumfangsseitig Austrittsöffnungen 13 für die abzuscheidenden Partikel auf. Die abgeschiedenen Partikel werden über eine Sammeleinrichtung 14 abgeführt. Wie in Fig. 1 gut zu erkennen ist, weist der Abscheiderotor 5 in der gezeigten Ausführungsform ausschließlich mantelumfangsseitige Austrittsöffnungen 13 im Bereich des Auslassabschnittes 12 auf.

Dem Abscheiderotor 5 ist sowohl im Einlassabschnitt 11, als auch im Auslassabschnitt 12 jeweils ein zur Drehachse 3 koaxiales, ringförmiges Strömungsleitelement 15, 16 zur Teilung des Gasstromes in einen radial äußeren partikelbeladenen Teilstrom 17 und einen radial inneren partikelfreien Teilstrom 18 zugeordnet. Der partikelfreie Teilstrom 18 strömt über den Ausströmkanal 8 als Reingas 9 ab. Zur Rückführung des partikelbeladenen Teilstromes 17 in den Abscheidekanal 10 bildet der Gasauslass 2 einen zusätzlichen, dem partikelbeladenen Teilstrom 17 zugeordneten Abzweigkanal 19 aus, der mit einem zusätzlichen Rückführkanal 20 des Gaseinlasses 1 strömungsverbunden ist.

Zwischen Abzweigkanal 19 und Rückführkanal 20 kann ein Gebläse 21 zwischengeschaltet sein.

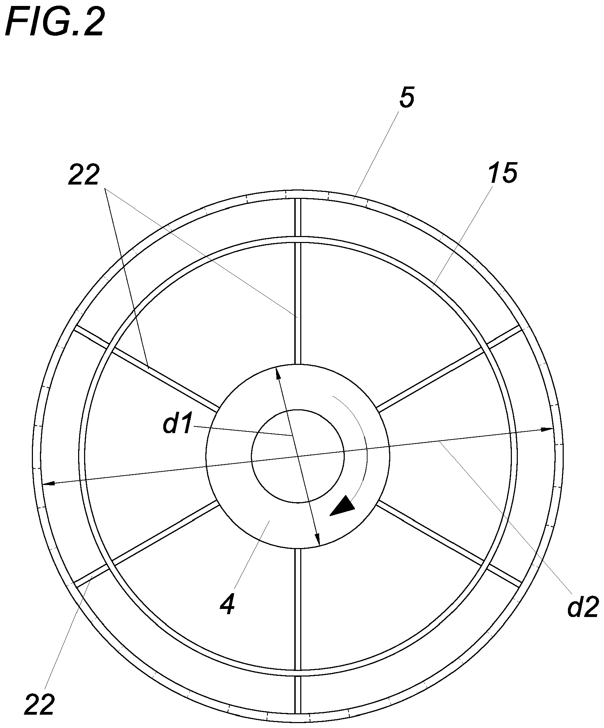

Gemäß der in Fig. 1 gezeigten Ausführungsform weist der Abscheiderotor 5 im Einlassabschnitt 11 und im Auslassabschnitt 12 Laufschaufeln 22 auf, die drehfest sowohl mit der Welle 4 als auch mit dem jeweiligen Strömungsleitelement 15, 16 verbunden sind. Dies ist in der in Fig. 2 gezeigten schematischen Stirnansicht des Abscheiderotors 5 ebenfalls gut ersichtlich. Der Durchmesser d1 der radial inneren Wand des Abscheidekanals 10 beträgt zudem mehr als 1/3 des lichten Durchmessers d2 des Abscheidekanals 10. In der gezeigten Ausführungsform entspricht der Durchmesser d1 beispielsweise dem Durchmesser der Welle 4 im Bereich des Abscheidekanals 10.

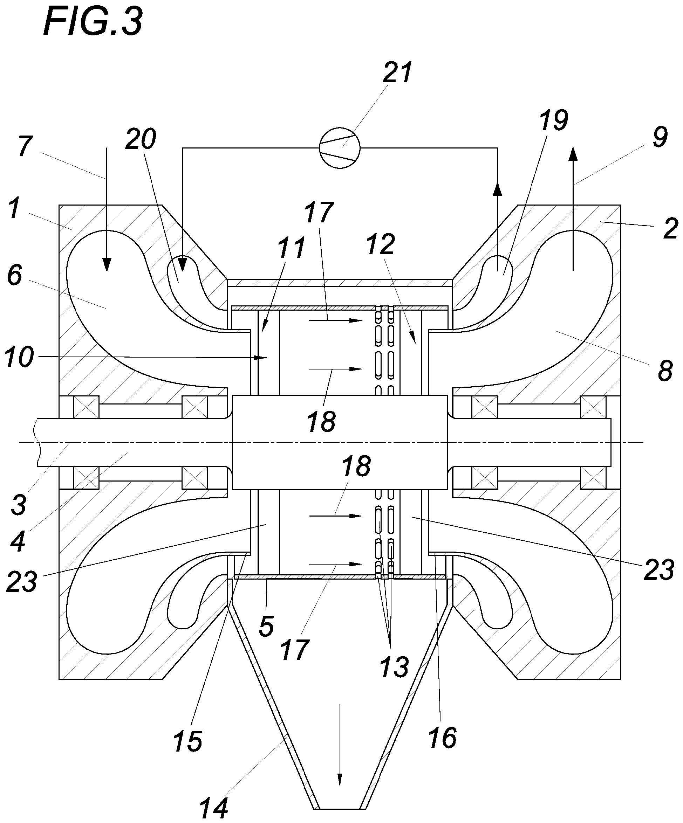

Gemäß der in Fig. 3 gezeigten Ausführungsform bilden der Gaseinlass 1 bzw. der Gasauslass 2 die jeweiligen Strömungsleitelemente 15, 16, welche somit nicht rotierbar sind. Diese Strömungsleitelemente 15, 16 sind folglich nicht mit dem Abscheiderotor 5 bzw. mit dessen Laufschaufeln 23 verbunden.

## Patentansprüche

1. Vorrichtung zur fliehkraftbedingten Abscheidung von Partikeln aus einem Gasstrom, mit einem einen Einströmkanal (6) für das Rohgas (7) aufweisenden Gaseinlass (1) und einem einen Ausströmkanal (8) für das partikelfreie Reingas (9) aufweisen Gasauslass (2), einer bezüglich einer Drehachse (3) rotierbaren, drehangetriebenen Welle (4), sowie einem auf der Welle (4) angeordneten, beschaufelten Abscheiderotor (5), der einen zur Drehachse (3) koaxialen Abscheidekanal (10) mit ringförmigem Querschnitt bildet, wobei sich der Abscheidekanal (10) in Längsrichtung der Drehachse (3) von einem mit dem Gaseinlass (1) strömungsverbundenen Einlassabschnitt (11) zu einem mit dem Gasauslass (2) strömungsverbundenen Auslassabschnitt (12) erstreckt und mantelumfangsseitig Austrittsöffnungen (13) für die abzuscheidenden Partikel aufweist, **dadurch gekennzeichnet, dass** dem Abscheiderotor (5) im Auslassabschnitt (12) ein zur Drehachse (3) koaxiales, ringförmiges Strömungsleitelement (16) zur Teilung des Gasstromes in einen partikelbeladenen Teilstrom (17) und einen partikelfreien Teilstrom (18) zugeordnet ist und dass zur Rückführung des partikelbeladenen Teilstromes (17) in den Abscheidekanal (10) der Gasauslass (2) einen zusätzlichen, dem partikelbeladenen Teilstrom (17) zugeordneten Abzweigkanal (19) ausbildet, der mit einem zusätzlichen Rückführkanal (20) des Gaseinlasses (1) strömungsverbunden ist.

2. Vorrichtung nach Anspruch 1, **dadurch gekennzeichnet, dass** dem Abscheiderotor (5) im Einlassabschnitt (11) ein weiteres zur Drehachse (3) koaxiales, ringförmiges Strömungsleitelement (15) zugeordnet ist.

3. Vorrichtung nach Anspruch 1 oder 2, **dadurch gekennzeichnet, dass** der Abscheiderotor (5) im Einlassabschnitt (11) oder / und im Auslassabschnitt (12) drehfest sowohl mit der Welle (4) als auch mit dem jeweiligen Strömungsleitelement (15, 16) verbundene Laufschaufeln (22) aufweist.

4. Vorrichtung Anspruch 3, **dadurch gekennzeichnet, dass** das jeweilige Strömungsleitelement (15, 16) die ihm zugeordneten Laufschaufeln (22) bezüglich seiner Längserstreckung in Richtung der Drehachse (3) beidseits überragt.

5. Vorrichtung nach einem der Ansprüche 1 bis 4, **dadurch gekennzeichnet, dass** der Abscheiderotor (5) ausschließlich mantelumfangsseitige Austrittsöffnungen (13) im Bereich des Auslassabschnittes (12) aufweist.

6. Vorrichtung nach einem der Ansprüche 1 bis 5, **dadurch gekennzeichnet, dass** der Durchmesser (d1) der radial inneren Wand des Abscheidekanals (10) mindestens 1/3 des lichten Durchmessers (d2) des Abscheidekanals (10) beträgt.

7. Vorrichtung nach einem der Ansprüche 1 bis 6, **dadurch gekennzeichnet, dass** der Abscheidekanal (10) zwischen Einlassabschnitt (11) und Auslassabschnitt (12) einbautenfrei ausgeführt ist.

8. Verfahren zur fliehkraftbedingten Abscheidung von Partikeln aus einem Gasstrom, mit einer Vorrichtung nach einem der vorangegangenen Ansprüche, **dadurch gekennzeichnet, dass** das aufzureinigende Rohgas (7) über einen Einströmkanal (6) des Gaseinlasses (1) dem Abscheidekanal (10) zugeführt wird und der Gasstrom im Auslassabschnitt (12) über den Strömungsteiler (16) in einen radial äußeren partikelbeladenen Teilstrom (17) und einen radial inneren partikelfreien Teilstrom (18) aufgeteilt wird, wobei der partikelfreie Teilstrom (18) über den Ausströmkanal (8) im Gasauslass (2) abgeführt und der partikelbeladene Teilstrom (17) über den Abzweigkanal (19) sowie über den mit dem Abzweigkanal (19) strömungsverbundenen Rückführkanal (20) dem Abscheidekanal (10) wieder zugeführt wird, und wobei die abzuscheidenden Partikel über die Austrittsöffnungen (13) des Abscheiderotors (5) abgeschieden werden.

## Claims

1. Device for the centrifugal separation of particles from a gas stream, with a gas inlet (1) having an inflow channel (6) for the raw gas (7) and a gas outlet (2) having an outflow channel (8) for the particle-free clean gas (9), with a rotationally driven shaft (4) which can rotate relative to an axis of rotation (3), and with a bladed separator rotor (5) arranged on the shaft (4), which separator rotor (5) forms a separator channel (10) of annular cross-section coaxial with the axis of rotation (3), wherein the separator channel (10) extends in the longitudinal direction of the axis of rotation (3) from an inlet section (11) flow-connected with the gas inlet (1) to an outlet section (12) flow-connected with the gas outlet (2) and has on the circumferential side of its shell outlet openings (13) for the particles to be separated, **characterized in that** an annular flow guide element (16) coaxial to the axis of rotation (3) is associated to the separator rotor (5) in the outlet section (12) for dividing the gas stream into a particle-laden partial stream (17) and a particle-free partial stream (18), and **in that** the gas outlet (2) forms an additional branch channel (19) associated with the particle-laden partial stream (17) for returning the particle-laden partial stream (17) to the separator channel (10), wherein the branch channel (19) is flow-connected to an additional return channel (20) of the gas inlet (1).

2. Device according to claim 1, **characterized in that** the separator rotor (5) in the inlet section (11) is associated with a further annular flow guide element (15) coaxial with the axis of rotation (3).

3. Device according to claim 1 or 2, **characterized in that** the separator rotor (5) in the inlet section (11) and/or in the outlet section (12) has rotor blades (22) connected in a rotationally fixed manner both to the shaft (4) and to the respective flow guide element (15, 16).

4. Device claim 3, **characterized in that** the respective flow guide element (15, 16) with respect to its longitudinal extent in the direction of the axis of rotation (3) projects beyond the associated rotor blades (22) on both sides.

5. Device according to one of claims 1 to 4, **characterized in that** the separator rotor (5) has outlet openings (13) exclusively on the circumferential side of the shell in the region of the outlet section (12).

6. Device according to one of claims 1 to 5, **characterized in that** the diameter (d1) of the radially inner wall of the separator channel (10) is at least 1/3 of the clear diameter (d2) of the separator channel (10).

7. Device according to one of claims 1 to 6, **characterized in that** the separator channel (10) between the inlet section (11) and the outlet section (12) is designed to be free of internals.

8. Method for the centrifugal separation of particles from a gas stream, with a device according to one of the preceding claims, **characterized in that** the raw gas (7) to be purified is fed to the separation channel (10) via an inflow channel (6) of the gas inlet (1) and the gas stream is divided in the outlet section (12) via the flow divider (16) into a radially outer particle-laden partial stream (17) and a radially inner particle-free partial stream (18), wherein the particle-free partial stream (18) is discharged via the outflow channel (8) in the gas outlet (2) and the particle-laden partial stream (17) is fed back to the separator channel (10) via the branch channel (19) and via the return channel (20) which is flow-connected to the branch duct (19), and wherein the particles to be separated are separated via the outlet openings (13) of the separator rotor (5).

## Revendications

1. Dispositif de séparation de particules d'un flux de gaz sous force centrifuge, avec une entrée de gaz (1) présentant un canal d'entrée (6) pour le gaz brut (7) et une sortie de gaz (2) présentant un canal de sortie (8) pour le gaz pur exempt de particules (9), un arbre (4) entraîné en rotation pivotable par rapport à un axe de rotation (3), ainsi qu'un rotor de séparation à aubes (5) agencé sur l'arbre (4), qui forme un canal de séparation de section annulaire (10) coaxial à l'axe de rotation (3), dans lequel le canal de séparation (10) s'étend dans la direction longitudinale de l'axe de rotation (3) à partir d'une section d'entrée (11) en communication d'écoulement avec l'entrée de gaz (1) jusqu'à une section de sortie (12) en communication d'écoulement avec la sortie de gaz (2) et comporte au niveau de la périphérie de l'enveloppe des ouvertures de sortie (13) pour les particules à séparer, **caractérisé en ce qu'**un élément de guidage d'écoulement annulaire (16), coaxial à l'axe de rotation (3), est associé au rotor de séparation (5) dans la section de sortie (12) dans le but de diviser le flux de gaz en un flux partiel chargé en particules (17) et un flux partiel exempt de particules (18), et **en ce que**, pour le retour du flux partiel chargé en particules (17) à l'intérieur du canal de séparation (10), la sortie de gaz (2) forme un canal de dérivation supplémentaire (19) associé au flux partiel chargé en particules (17), qui se trouve en communication d'écoulement avec un canal de retour supplémentaire (20) de l'entrée de gaz (1).

2. Dispositif selon la revendication 1, **caractérisé en ce qu'**un autre élément de guidage d'écoulement annulaire (15), coaxial à l'axe de rotation (3), est associé au rotor de séparation (5) dans la section d'entrée (11).

3. Dispositif selon la revendication 1 ou 2, **caractérisé en ce que** le rotor de séparation (5) présente, dans la section d'entrée (11) et/ou dans la section de sortie (12), des aubes mobiles (22) connectées de façon solidaire en rotation à la fois à l'arbre (4) et à l'élément de guidage d'écoulement (15, 16) respectif.

4. Dispositif selon la revendication 3, **caractérisé en ce que** l'élément de guidage d'écoulement respectif (15, 16) dépasse sur les deux côtés les aubes mobiles (22) qui lui sont associées par rapport à son étendue longitudinale dans la direction de l'axe de rotation (3).

5. Dispositif selon l'une quelconque des revendications 1 à 4, **caractérisé en ce que** le rotor de séparation (5) comporte des orifices de sortie (13) exclusivement au niveau de la périphérie de l'enveloppe dans la région de la section de sortie (12).

6. Dispositif selon l'une quelconque des revendications 1 à 5, **caractérisé en ce que** le diamètre (d1) de la paroi radialement intérieure du canal de séparation (10) est au moins égal à 1/3 du diamètre intérieur (d2) du canal de séparation (10).

7. Dispositif selon l'une quelconque des revendications 1 à 6, **caractérisé en ce que** le canal de séparation (10) entre la section d'entrée (11) et la section de sortie (12) est réalisé libre de structures internes.

8. Procédé de séparation de particules d'un flux de gaz à l'aide d'une force centrifuge exécuté en utilisant un dispositif selon l'une quelconque des revendications précédentes, **caractérisé en ce que** le gaz brut à purifier (7) est amené au canal de séparation (10) par l'intermédiaire d'un canal d'entrée (6) de l'entrée de gaz (1), et le flux de gaz est divisé à l'intérieur d'une section de sortie (12) par le diviseur d'écoulement (16) en un flux partiel radialement extérieur chargé en particules (17) et un flux partiel radialement intérieur exempt de particules (18), dans lequel le flux partiel exempt de particules (18) est évacué par le canal de sortie (8) dans la sortie de gaz (2) et le flux partiel chargé en particules (17) est renvoyé vers le canal de séparation (10) par le canal de dérivation (19) ainsi que par le canal de retour (20) qui se trouve en communication d'écoulement avec le canal de dérivation (19), et dans lequel les particules à séparer sont séparées par les ouvertures de sortie (13) du rotor de séparation (5).
